# EUROPÄISCHE PATENTANMELDUNG

(11) **EP 3 967 654 A1**
(43) Veröffentlichungstag der Anmeldung: **16.03.2022**
(21) Anmeldenummer: 20020409.7
(22) Anmeldetag: 11.09.2020
(51) Int. Cl.: C01B 3/38, C25B 1/042

(54) **VERFAHREN UND ANLAGE ZUR HERSTELLUNG VON WASSERSTOFF DURCH DAMPFREFORMIERUNG UND HOCHTEMPERATURELEKTROLYSE**

(71) Anmelder: L'AIR LIQUIDE, SOCIÉTÉ ANONYME POUR L'ÉTUDE ET L'EXPLOITATION DES PROCÉDÉS GEORGES CLAUDE, 75007 Paris (FR)
(72) Erfinder: Swatantra, Shrivastava, 60439 Frankfurt am Main (DE)
(74) Vertreter: Stang, Stefan

(57) **Zusammenfassung**

Die Erfindung betrifft ein Verfahren und eine Anlage zur Herstellung von Wasserstoff durch Dampfreformierung und Hochtemperaturelektrolyse. Durch Dampfreformierung wird ein Synthesegas aus einem kohlenstoffhaltigen Ausgangsmaterial und Dampf erzeugt. Im Rahmen der Dampfreformierung generierte Prozesswärme wird zum Erzeugen von Dampf aus Wasser genutzt. So erzeugter Dampf wird in einem Hochtemperaturelektrolyse-Schritt als Edukt zur Erzeugung eines Elektrolyseprodukts genutzt, wobei das Elektrolyseprodukt zumindest Wasserstoff und Sauerstoff umfasst. Wasserstoff wird aus dem durch Dampfreformierung erzeugten Synthesegas und aus dem durch Hochtemperaturelektrolyse erzeugten Elektrolyseprodukt abgetrennt.

## Beschreibung

### Gebiet der Erfindung

Die Erfindung betrifft ein Verfahren sowie eine Anlage zur Herstellung von Wasserstoff durch Dampfreformierung und Hochtemperaturelektrolyse.

### Stand der Technik

Wasserstoff wird heute hauptsächlich durch Dampfreformierung von kohlenstoffhaltigen Einsatzstoffen wie Erdgas, welches hauptsächlich aus Methan besteht, hergestellt (sogenanntes *steam methane reforming* - SMR). Dabei wird das Methan mit Dampf zu einer als Synthesegas bekannten Mischung aus Wasserstoff, Kohlenmonoxide und Kohlendioxid umgesetzt. Anschließend wird das Kohlenmonoxid zur Erhöhung der Wasserstoffausbeute üblicherweise durch eine sogenannte Wassergas-Shift zu Kohlendioxid und Wasserstoff umgesetzt. Der Wasserstoff wird anschließend von den übrigen Produktgasen durch Druckwechseladsorption abgetrennt und dadurch in Reinform erhalten.

Die Dampfreformierung ist ein stark endothermer Prozess und erfordert damit die Zufuhr externer Energie. Diese erfolgt in der Regel durch innerhalb eines Reformerofens unten, oben oder in Ausnahmefällen seitlich oder terrassenartig angeordneten Brennern, deren Brenngase senkrecht angeordnete, mit einem Nickel-Katalysator befüllte Reaktionsrohre befeuern. Die Reaktionsrohre, welche in mehreren Reihen innerhalb der Reformerofens angeordnet sind, werden über Versorgungsleitungen mit Erdgas und Dampf beschickt.

Die Dampfreformierung wird bei Temperaturen von circa 800 bis 900 °C durchgeführt. Dies eröffnet die Möglichkeit, sowohl die in den Verbrennungsgasen der Brenner als auch die im heißen Synthesegas vorhandene Prozesswärme zur Erzeugung von Exportdampf zu nutzen, da nur ein Teil dieser Wärme prozessintern, beispielsweise zur internen Dampferzeugung und Vorheizung des kohlenstoffhaltigen Ausgangsmaterials, genutzt wird. Dies erfolgt bei der Abkühlung der Verbrennungsgase und des Synthesegases, wobei Wasser in Dampf umgewandelt wird. Bei dem gebildeten Exportdampf handelt es sich meist um Niederdruckdampf. In einer Raffinerie-Wasserstoffanlage wird dieser überschüssige, koproduzierte Dampf in die Dampfsammler der Raffinerie exportiert.

In letzter Zeit ist der Wert für diesen Exportdampf für viele Anlagenstandorte kontinuierlich gesunken. Für die Szenarien, in denen die Brenngase im Vergleich zu dem für die SMR genutzten kohlenstoffhaltigen Ausgangsmaterial (zum Beispiel Erdgas) kostengünstiger sind, und der Exportdampf gleichzeitig einen relativ niedrigen Wert aufweist, ist es schwierig, den Dampfreformierungsprozess für hohe thermische Wirkungsgrade auszulegen. Solche Szenarien führen daher oft zu Auslegungen mit höheren Kohlendioxidemissionen. In Anbetracht des vom Menschen verursachten Klimawandel und davon ausgehend, dass Kohlendioxidsteuern in Zukunft kontinuierlich steigen werden, ist dies aus ökologischen und ökonomischen Gründen nicht wünschenswert.

Wasserstoff kann auch durch Elektrolyse von Wasser, vorzugsweise mit Hilfe von Strom aus erneuerbaren Energiequellen, hergestellt werden. Die sogenannte Hochtemperaturelektrolyse ist wirtschaftlicher als die Elektrolyse bei Raumtemperatur, da ein Teil der für die Spaltung von Wasserstoff und Sauerstoff benötigten Energie in Form von Wärme bereitgestellt wird. Die Technologie ist jedoch noch in Entwicklung, und es ist heute aus wirtschaftlichen und Effizienzgründen noch nicht möglich, die schon lange im Industriemaßstab etablierten Dampfreformierungsprozesse durch Hochtemperaturelektrolyse zu ersetzen. Insbesondere sind für eine bestimmte pro Zeiteinheit zu produzierende Wasserstoffmenge für den Bau einer Hochtemperaturelektrolyseanlage signifikant höhere Investitionsausgaben (CAPEX) zu erwarten als für den Bau einer Dampfreformierungsanlage.

Wesentliche Nachteile des Dampfreformierungsverfahrens sind somit das verwendete kohlenstoffhaltige Einsatzmaterial, welches zu direkten Kohlendioxidemissionen führt, die Koproduktion von stetig im Wert abnehmendem Exportdampf, und die Kohlendioxidemissionen aufgrund der Bildung von Verbrennungsgasen bei der Befeuerung der Reaktionsrohre des Reformerofens. Die Hochtemperaturelektrolyse löst das Problem der direkten Kohlendioxidemissionen, indem das kohlenstoffhaltige Ausgangsmaterial durch Wasser und/oder Dampf ersetzt wird. Nachteile bestehen jedoch aufgrund der hohen Investitionsausgaben (CAPEX) und zusätzlich hohen Kosten für fossile Elektrizität (z.B. aus Kohlekraft) oder Elektrizität aus erneuerbaren Energien. Fossile Elektrizität wiederum zieht indirekte Kohlendioxidemissionen nach sich. Bei der Verwendung von Elektrizität aus erneuerbaren Energiequellen ist dafür mit noch höheren Betriebskosten (OPEX) zu rechnen.

Die KR100514178B1 beschreibt ein Verfahren, in dem ein Produktgas (Synthesegas) aus einer partiellen Oxidation oder einem autothermen Reformer als Wärmequelle für einen Elektrolyseur verwendet wird. Der in der Elektrolyse erzeugte Sauerstoff wird als Edukt für die partielle Oxidation oder den autothermen Reformer verwendet.

### Beschreibung der Erfindung

Allgemein ist es eine Aufgabe der vorliegenden Erfindung, die vorgenannten Nachteile des Standes der Technik zu überwinden.

Insbesondere besteht eine Aufgabe der vorliegenden Erfindung darin, ein Verfahren zur Verfügung zu stellen, welches im Dampfreformierungsverfahren erzeugten Exportdampf einer alternativen, möglichst prozessinternen Verwertung zuführt.

Eine weitere Aufgabe der vorliegenden Erfindung besteht darin, ein Verfahren zur Verfügung zu stellen, welches niedrigere effektive Kohlendioxidemissionen (emittierte Menge Kohlendioxid pro Normkubikmeter produzierten Wasserstoffs) aufweist.

Eine weitere Aufgabe der vorliegenden Erfindung besteht darin, eine Anlage zur Verfügung zu stellen, welche zumindest eine der vorgenannten Aufgaben löst.

Ein Beitrag zur mindestens teilweisen Erfüllung mindestens einer der obigen Aufgaben wird durch die unabhängigen Ansprüche geleistet. Die abhängigen Ansprüche stellen bevorzugte Ausführungsformen bereit, die zur mindestens teilweisen Erfüllung mindestens einer der Aufgaben beitragen. Bevorzugte Ausgestaltungen von Bestandteilen einer erfindungsgemäßen Kategorie sind, soweit zutreffend, ebenso bevorzugt für gleichnamige oder entsprechende Bestandteile einer jeweils anderen erfindungsgemäßen Kategorie.

Die Ausdrücke "aufweisend", "umfassend" oder "beinhaltend" etc. schließen nicht aus, dass weitere Elemente, Inhaltsstoffe etc. enthalten sein können. Der unbestimmte Artikel "ein" schließt nicht aus, dass eine Mehrzahl vorhanden sein kann.

Die Aufgaben der Erfindung werden zumindest teilweise gelöst durch ein Verfahren zur Herstellung von Wasserstoff durch Dampfreformierung und Hochtemperaturelektrolyse, wobei das Verfahren die folgenden Schritte umfasst:
(a) Erzeugen eines Synthesegases aus einem kohlenstoffhaltigen Ausgangsmaterial und Dampf durch Dampfreformierung, wobei das Synthesegas zumindest Wasserstoff, Kohlenmonoxid und Kohlendioxid umfasst;
(b) Erzeugen von Dampf durch Erhitzen von Wasser mittels in Schritt (a) generierter Prozesswärme;
(c) Verwendung des in Schritt (b) erzeugten Dampfs als Edukt in einem Hochtemperaturelektrolyse-Schritt zur Erzeugung eines Elektrolyseprodukts, wobei das Elektrolyseprodukt Wasserstoff und Sauerstoff umfasst;
(d) Abtrennen von Wasserstoff aus dem in Schritt (a) erhaltenen Synthesegas und aus dem in Schritt (c) erhaltenen Elektrolyseprodukt.

Unter dem Begriff "Dampf" wird im Rahmen dieser Offenbarung, sofern nicht anderweitig erläutert, Wasserdampf verstanden.

Das kohlenstoffhaltige Ausgangsmaterial gemäß Schritt (a) umfasst insbesondere Erdgas, insbesondere dessen Hauptkomponente Methan. Andere kohlenstoffhaltige Verbindungen, insbesondere höhere Kohlenwasserstoffe wie Ethan, Propan und/oder Butan können ebenfalls im kohlenstoffhaltigen Ausgangsmaterial vorhanden sein. In solchen Fällen wird das kohlenstoffhaltige Ausgangsmaterial einem Vorreformierungsschritt (*prereforming*) in einem Vorreformer unterzogen, um höhere Kohlenwasserstoffe mit Dampf zu kurzkettigen Kohlenwasserstoffen umzuwandeln, insbesondere mit dem Zweck den Methan-Anteil im kohlenstoffhaltigen Ausgangsmaterial zu erhöhen. Bei der Vorreformierung werden Kohlenwasserstoffe mit mindestens zwei Kohlenstoffatomen in Kohlenmonoxid, Wasserstoff und Methan umgewandelt. Im Vorreformer reagiertes kohlenstoffhaltiges Ausgangsmaterial kann somit bereits eine bestimmte Menge an Synthesegas enthalten.

Ferner wird das kohlenstoffhaltige Ausgangsmaterial vorzugsweise einem Hydrodesulfurierungsschritt unterzogen, um Schwefelverbindungen aus dem kohlenstoffhaltigen Ausgangsmaterial zu entfernen. Schwefelverbindungen stellen ein Katalysatorgift für den bei der Dampfreformierung verwendeten Nickel-Katalysator dar.

Das kohlenstoffhaltige Ausgangsmaterial wird aufgeheizt und vorzugsweise bei 750 °C bis 920 °C der eigentlichen endothermen Dampfreformierung zur Bildung von Synthesegas unterzogen. Die Dampfreformierung läuft gemäß folgendem Reaktionsschema ab:

(1) CH₄ + H₂O ⇄ CO + 3 H₂

(2) CH₄ + 2 H₂O ⇄ CO₂ + 4 H₂

Das primär gebildete Synthesegas, welches gemäß (1) und (2) Wasserstoff, Kohlenmonoxid und Kohlendioxid aufweist, wird vorzugsweise in einer nachgeschalteten Wassergas-Shift Reaktion zur Erhöhung der Wasserstoffausbeute gemäß folgendem Reaktionsschema umgesetzt.

(3) CO + H₂O ⇄ CO₂ + H₂

Die Wassergas-Shift Reaktion gemäß (3) ist exotherm.

Das Verhältnis des eingesetzten Dampfs in kg pro produziertem Normkubikmeter (Nm³) Wasserstoff in Bezug auf Schritt (a), also den Teil der Dampfreformierung, beträgt zwischen 0,2 und 1,0. Der tatsächliche Wert ergibt sich aus den Kosten der für die Befeuerung genutzten Brenngase, des kohlenstoffhaltigen Ausgangsstoffs und des Werts des gemäß Schritt (b) erzeugten Dampfs.

Bei der endothermen Dampfreformierung gebildete Prozesswärme wird gemäß Schritt (b) zur Dampferzeugung genutzt, indem Wasser durch Übertragung der Prozesswärme erhitzt und verdampft wird. Unter Prozesswärme wird insbesondere Abwärme verstanden, die im Rahmen der Dampfreformierung frei wird und im Sinne einer Wärmerückgewinnung durch Bildung von Dampf verwendet werden kann.

Erfindungsgemäß wird der gemäß Schritt (b) erzeugte Dampfs gemäß Schritt (c) als Edukt in einem Hochtemperaturelektrolyse-Schritt zur Erzeugung eines Elektrolyseprodukts genutzt, wobei das Elektrolyseprodukt zumindest Wasserstoff und Sauerstoff umfasst. Der gemäß Schritt (b) erzeugte Dampf wird dabei unmittelbar als dampfförmiges Edukt (Wasserdampf) oder in verflüssigter Form als Wasser bei entsprechendem Druck im Hochtemperaturelektrolyse-Schritt verwendet.

Der Begriff "Hochtemperaturelektrolyse" umfasst Elektrolyseverfahren, die bei Temperaturen von vorzugsweise 100 °C bis 850 °C durchgeführt werden. Der Hochtemperaturelektrolyse-Schritt gemäß Schritt (c) wird entsprechend vorzugsweise bei 100 °C bis 850 °C durchgeführt. Höhere Temperaturen, die deutlich unterhalb der Thermolyse-Temperatur von Wasser liegen, sind dabei ebenfalls möglich. Insbesondere kann der Hochtemperaturelektrolyseschritt bei Temperaturen von bis zu 900 °C, oder 1000 °C, oder 1100 °C, oder 1200 °C durchgeführt werden. Weiter bevorzugt wird der Hochtemperaturelektrolyse-Schritt bei einer Prozesstemperatur von mindestens 500 °C durchgeführt. Im Hochtemperaturelektrolyse-Schritt wird der in Schritt (b) gebildete und als Edukt verwendete Dampf durch Zufuhr von Elektrizität, also elektrischem Strom, insbesondere elektrischem Gleichstrom, zu den Elektrolyseproduktgasen Wasserstoff und Sauerstoff gespalten.

Gegebenenfalls sind für die Durchführung der Hochtemperaturelektrolyse gemäß Schritt (c) zusätzlich zum Edukt-Dampf weitere Hilfsstoffe erforderlich, wie beispielsweise Elektrolyte oder organische Lösungsmittel.

Das erfindungsgemäße Verfahren integriert zwei unterschiedliche Prozesse, und zwar die
- Reformierung eines kohlenstoffhaltigen Ausgangsmaterials mit Dampf (Dampfreformierung) zu Synthesegas (Wasserstoff, Kohlenmonoxid und Kohlendioxid) und
- die Hochtemperaturelektrolyse von Dampf, auch Wasserdampf und/oder Wasser zu einem Wasserstoff und Sauerstoff aufweisenden Elektrolyseprodukt,

in ein gemeinsames integriertes Verfahren.

Ziel des Verfahrens ist die Produktion von Wasserstoff. Gemäß Schritt (d) wird daher Wasserstoff aus dem in Schritt (a) erzeugten Synthesegas abgetrennt und Wasserstoff aus dem in Schritt (c) erzeugten Elektrolyseprodukt abgetrennt. Die dadurch erhaltenen Wasserstoffströme können anschließend zu einem Wasserstoffgesamtstrom zusammengeführt werden.

Die Abtrennung des Wasserstoffs aus dem Synthesegas erfolgt vorzugsweise durch einen Druckwechseladsorptionsschritt, alternativ oder zusätzlich dazu durch einen Membrantrennschritt. Das bei der Abtrennung des Wasserstoffs zurückbleibende Abgas enthält je nach Verfahrensführung unterschiedlich hohe Anteile an Gasen mit hohem Heizwert, zum Beispiel nicht abgetrennten Wasserstoff, nicht umgesetztes Methan, und/oder nicht im Rahmen der Wassergas-Shift umgesetztes Kohlenmonoxid. Das Abgas kann daher als Brenngas für die Befeuerung im Rahmen der Dampfreformierung gemäß Schritt (a) verwendet werden.

Der Anteil des produzierten Wasserstoffs gemäß Schritt (c), also der Anteil des durch den Hochtemperaturelektrolyse-Schritt produzierten Wasserstoff beträgt in Bezug auf die Gesamtmenge des produzierten Wasserstoffs vorzugsweise zwischen 1 und 40 % (in Volumenprozenten). Der optimale Wert ergibt sich dabei aus den Kosten für das kohlenstoffhaltige Ausgangsmaterial, das Brenngas, Elektrizität für den Hochtemperaturelektrolyseur und den Wert des gemäß Schritt (b) erzeugten Dampf.

Das Verfahren erlaubt in vorteilhafter Weise die Variation der produzierten Wasserstoffmenge durch Dampfreformierung gemäß Schritt (a) und Hochtemperaturelektrolyse gemäß Schritt (c). In vorteilhafter Weise können sowohl Schritt (a) als auch Schritt (c) unabhängig voneinander ausgeführt werden. Das heißt es ist möglich, über ein bestimmtes Zeitintervall Wasserstoff nur auf Basis der Hochtemperaturelektrolyse oder nur auf Basis der Dampfreformierung zu produzieren. Beispielsweise kann Wasserstoff ausschließlich durch Dampfreformierung produziert werden, wenn der Hochtemperaturelektrolyseur einer Wartung unterzogen wird und umgekehrt. Auch kann dies in Abhängigkeit des aktuellen Wasserstoff-Bedarfs erfolgen. Ist die Nachfrage nach Wasserstoff in Bezug auf eine betroffene Anlage gerade niedrig, könnte die Produktion durch Schritt (c) gedrosselt und dafür mehr Export-Dampf erzeugt werden. Die Menge des durch Hochtemperaturelektrolyse gemäß Schritt (c) erzeugten Wasserstoffs kann dann gedrosselt werden, wenn in einem bestimmten Zeitintervall mehr Exportdampf, beispielsweise für eine benachbarte Anlage, benötigt wird und umgekehrt erhöht werden, wenn weniger Exportdampf in einem bestimmten Zeitintervall benötigt wird.

Das erfindungsgemäße Verfahren löst ferner das allgemeine Problem von *stand alone* Hochtemperaturelektrolyse-Anlagen, welche ausgehend vom Stillstand bis zur Aktivierung lange Aufheizphasen benötigen. Diese Phase wird verkürzt, da durch Dampfreformierung gemäß Schritt (a) permanent Prozesswärme, beispielsweise in Form von Dampf, für Heizprozesse zur Verfügung steht.

Eine Ausführungsform des erfindungsgemäßen Verfahrens ist dadurch gekennzeichnet, dass die in Schritt (a) erzeugte Prozesswärme durch Abkühlen des in Schritt (a) erzeugten Synthesegases bereitgestellt wird.

Die im heißen Synthesegas gemäß Schritt (a) erzeugte Prozesswärme wird dabei zur Erzeugung von Dampf gemäß Schritt (b) auf Wasser übertragen. Prozessinterne Prozesswärme wird dadurch in vorteilhafter Weise unmittelbar für die Erzeugung des Edukt-Dampfs genutzt, welcher für den Hochtemperaturelektrolyse-Schritt gemäß Schritt (c) verwendet wird.

Eine Ausführungsform des erfindungsgemäßen Verfahrens ist dadurch gekennzeichnet, dass die in Schritt (a) erzeugte Prozesswärme durch Abkühlen von Verbrennungsgasen bereitgestellt wird, wobei die Verbrennungsgase bei der Verbrennung von Brenngasen erzeugt werden, wobei die Brenngase für die Befeuerung der endothermen Reformierungsreaktion bei der Dampfreformierung genutzt werden.

Die bei der Verbrennung der Brenngase zu Verbrennungsgasen gemäß Schritt (a) erzeugte Prozesswärme wird dabei zur Erzeugung von Dampf gemäß Schritt (b) auf Wasser übertragen. Prozessinterne Prozesswärme wird dadurch in vorteilhafter Weise unmittelbar für die Erzeugung des Edukt-Dampfs genutzt, welcher für den Hochtemperaturelektrolyse-Schritt gemäß Schritt (c) verwendet wird.

Bei der endothermen Dampfreformierung wird einerseits Prozesswärme generiert, indem durch das Befeuern der Reaktionsrohre mit Hilfe von Brenngasen heiße Verbrennungsgase gebildet werden. Andererseits wird durch die Bildung des heißen Synthesegases Prozesswärme generiert. Beide Arten von Prozesswärme können anschließend, einzeln oder kombiniert, zur Erzeugung des für Schritt (c) erforderlichen Edukt-Dampfs genutzt werden.

Eine Ausführungsform des erfindungsgemäßen Verfahrens ist dadurch gekennzeichnet, dass der in Schritt (b) erzeugte Dampf für die Erzeugung von Elektrizität genutzt wird, und die erzeugte Elektrizität für die Erzeugung des Elektrolyseprodukts im Hochtemperaturelektrolyse-Schritt gemäß Schritt (c) genutzt wird.

Der gemäß Schritt (b) erzeugte Dampf kann teilweise für die Erzeugung der für den Hochtemperaturelektrolyse-Schritt erforderliche Elektrizität genutzt werden, indem die im Dampf enthaltene kinetische Energie und Wärmeenergie in elektrische Energie umgewandelt wird. Dadurch muss weniger Elektrizität, also elektrischer Strom, aus externen Quellen für den Hochtemperaturelektrolyse-Schritt importiert werden. Ferner kann das Verfahren dadurch in vorteilhafter Weise so ausgelegt werden, dass keine externe Energiequelle für den Import von Elektrizität erforderlich ist. Die techno-ökonomische Analyse eines derart ausgestalteten Verfahrens (keine externe Quelle für Elektrizität) hat ergeben, dass die spezifischen Kohlendioxidemissionen (Masse erzeugten Kohlendioxids in kg pro Volumeneinheit produzierten Wasserstoffs in Normkubikmeter) dadurch bis zu 2,1 % niedriger ausfallen im Vergleich zu einem reinen Dampfreformierungsprozess.

In einem Beispiel wird dabei der in Schritt (b) erzeugte Dampf einer Dampfturbine zugeführt wird, und die Elektrizität durch einen der Dampfturbine nachgeschalteten Generator erzeugt.

Dies ist ein Beispiel für eine etablierte Technologie zur Erzeugung von Elektrizität durch Dampf. Andere dem Fachmann bekannten Technologien zur Erzeugung von elektrischem Strom aus Dampf können ebenfalls im Rahmen der Erfindung genutzt werden.

In einem Beispiel kann ein Teil des Dampfs aus der Dampfturbine abgezogen und als Edukt dem Hochtemperatur-Elektrolyseschritt gemäß Schritt (c) zugeführt werden.

Dies erlaubt eine weitere Flexibilisierung des Verfahren, beispielsweise wenn mehr Dampf aus der Abkühlung von Verbrennungsgasen oder heißem Synthesegas direkt als Exportdampf aus dem Verfahren abgezogen werden soll.

Eine Ausführungsform des erfindungsgemäßen Verfahrens ist dadurch gekennzeichnet, dass für die Erzeugung des Elektrolyseprodukts im Hochtemperaturelektrolyse-Schritt gemäß Schritt (c) eine externe Elektrizitätsquelle genutzt wird.

In diesem Fall wird der für den Schritt der Hochtemperaturelektrolyse benötigte elektrische Strom zumindest teilweise aus einer externen Elektrizitätsquelle importiert. Je mehr Dampf als Exportdampf und/oder Edukt-Dampf für Schritt (c) benötigt wird, desto mehr Elektrizität kann importiert werden, ohne diese prozessintern erzeugen zu müssen.

In einem Beispiel stellt die externe Elektrizitätsquelle Elektrizität aus einer erneuerbaren Energiequelle bereit.

Insbesondere in dem Fall, dass vornehmlich oder ausschließlich Elektrizität aus regenerierbaren Energiequellen für den Schritt der Hochtemperaturelektrolyse zur Verfügung steht, ist es sinnvoll den gemäß Schritt (b) erzeugten Dampf ausschließlich als Edukt-Dampf für den Hochtemperaturelektrolyse-Schritt gemäß Schritt (c) zu nutzen. Dadurch werden die effektiven Kohlendioxidemissionen des Verfahrens spürbar gesenkt. Die techno-ökonomische Analyse eines derart ausgestalteten Verfahrens (ausschließlich Verwendung von Strom aus erneuerbaren Energiequellen, keine interne Umwandlung von Dampf in elektrischen Strom) hat ergeben, dass die spezifischen Kohlendioxidemissionen (Masse erzeugten Kohlendioxids in kg pro Volumeneinheit produzierten Wasserstoffs in Normkubikmeter) dadurch bis zu 8,5 % niedriger ausfallen im Vergleich zu einem herkömmlichen reinen Dampfreformierungsverfahren.

Eine Ausführungsform des erfindungsgemäßen Verfahrens ist dadurch gekennzeichnet, dass im Hochtemperaturelektrolyse-Schritt gemäß Schritt (c) ausschließlich Dampf als Edukt verwendet wird, wobei das Elektrolyseprodukt Wasserstoff und Sauerstoff umfasst.

Für den einfachsten Fall des erfindungsgemäßen Verfahrens wird reiner oder im Wesentlichen reiner Dampf als Edukt für den Hochtemperaturelektrolyse-Schritt gemäß Schritt (c) verwendet. Als Elektrolyseprodukt ergibt sich in diesem Fall eine Mischung aus Wasserstoff und Sauerstoff. Der an der Kathode des Hochtemperaturelektrolyseurs erzeugte Wasserstoff wird im Sinne von Schritt (d) durch einen Separator vom an der Anode erzeugten Sauerstoff getrennt. Der an der Anode erzeugte Sauerstoff kann einer weiteren Verwendung zugeführt werden, wie beispielsweise einem im gleichen Anlagenkomplex vorhandenen Schwefelrückgewinnungsverfahren (Claus-Prozess) zugeführt werden.

Eine Ausführungsform des erfindungsgemäßen Verfahrens ist dadurch gekennzeichnet, dass im Hochtemperaturelektrolyse-Schritt gemäß Schritt (c) sowohl Dampf als auch Kohlendioxid als Edukte verwendet werden, wobei das Elektrolyseprodukt Synthesegas und Sauerstoff umfasst.

Gemäß dieser Ausgestaltung des erfindungsgemäßen Verfahrens werden an der Kathode des Hochtemperaturelektrolyseurs Kohlendioxid und wassergebundener Wasserstoff zu Kohlenmonoxid und freiem Wasserstoff reduziert. An der Kathode des Hochtemperaturelektrolyseurs wird wassergebundener Sauerstoff zu freiem Sauerstoff oxidiert. In diesem Fall wird auch von Hochtemperatur-Co-Elektrolyse gesprochen. Das Elektrolyseprodukt stellt in diesem Fall eine Mischung aus Synthesegas und Sauerstoff dar.

Das Synthesegas umfasst vorzugsweise Wasserstoff und Kohlenmonoxid.

Das an der Kathode des Hochtemperaturelektrolyseurs erzeugte Synthesegas, welches in jedem Fall Wasserstoff aufweist, wird im Sinne von Schritt (d) durch einen Separator vom an der Anode erzeugten Sauerstoff getrennt. Der an der Anode erzeugte Sauerstoff kann einer weiteren Verwendung zugeführt werden. Das Synthesegas selbst kann in einem nachgeschalteten Trennschritt in Kohlenmonoxid und Wasserstoff getrennt werden. Alternativ wird es einem Wassergas-Shift Schritt zur Erhöhung der Wasserstoff-Ausbeute zugeführt. Das dabei nach Abtrennung des Wasserstoffs als Nebenprodukt erzeugte Kohlendioxid kann wiederum dem Hochtemperaturelektrolyse-Schritt gemäß Schritt (c) zugeführt werden. Alternativ wird das Synthesegas direkt einer nachgeschalteten Synthesestufe zugeführt, beispielsweise einer Methanolsynthese.

Vorzugsweise wird das für den Hochtemperaturelektrolyse-Schritt als Edukt verwendete Kohlendioxid durch Abtrennung aus dem in Schritt (a) erzeugten Synthesegas gewonnen.

Soll durch den Hochtemperaturelektrolyse-Schritt gemäß Schritt (c) eine Mischung aus Synthesegas und Sauerstoff als Elektrolyseprodukt gewonnen werden, kann die ökologische Bilanz des Prozesses dadurch verbessert werden, dass im Rahmen von Schritt (a) obligatorisch gebildetes Kohlendioxid neben Dampf als eines der Edukte für Schritt (c) verwendet wird. Insbesondere im Rahmen der von Schritt (a) vorzugsweise eingesetzten Wassergas-Shift Reaktion fallen große Mengen Kohlendioxid an, die auf diese Weise einer sinnvollen Verwertung zugeführt werden können. Das Kohlendioxid fällt dabei beispielsweise bei der Abtrennung des Wasserstoffs gemäß Schritt (d) durch Druckwechseladsorption und/oder Membrantrennung als Abgas an. Vorzugsweise wird das Kohlendioxid dabei zunächst in Reinform gewonnen, bevor es dem Hochtemperaturelektrolyse-Schritt gemäß Schritt (c) zugeführt wird. Dies kann beispielsweise durch eine physikalische oder chemische Gaswäsche erfolgen, oder durch ein kryogenes Verfahren, in welchem das Kohlendioxid aus dem jeweiligen Gasgemisch durch Kondensation von anderen Gasbestandteilen abgetrennt wird.

Die Aufgaben der vorliegenden Erfindung werden ferner zumindest teilweise gelöst durch eine Anlage zur Herstellung von Wasserstoff durch Dampfreformierung und Hochtemperaturelektrolyse, wobei die Anlage folgende miteinander in Fluidverbindung stehende Anlagenkomponenten aufweist:
(a) Eine Dampfreformierungseinheit zur Erzeugung eines Synthesegases aus einem kohlenstoffhaltigen Ausgangsmaterial und Dampf durch Dampfreformierung, wobei das Synthesegas zumindest Wasserstoff, Kohlenmonoxid und Kohlendioxid umfasst;
(b) Mittel zum Erzeugen von Dampf durch Erhitzen von Wasser mittels in der Dampfreformierungseinheit (a) erzeugter Prozesswärme;
(c) einen Hochtemperatur-Elektrolyseur zur Erzeugung eines Wasserstoff und Sauerstoff aufweisenden Elektrolyseprodukts aus durch die Mittel (b) erzeugtem Dampf als Edukt;
(d) eine Vorrichtung zum Abtrennen von Wasserstoff aus mittels der Dampfreformierungseinheit (a) erzeugten Synthesegases und eine Vorrichtung zum Abtrennen von Wasserstoff aus mittels des Hochtemperatur-Elektrolyseurs (c) erzeugten Elektrolyseprodukts.

Die Aufgaben der Erfindung werden ferner zumindest teilweise gelöst durch die erfindungsgemäße Anlage, konfiguriert zur Durchführung des erfindungsgemäßen Verfahrens.

Die Aufgaben der Erfindung werden ferner zumindest teilweise gelöst durch eine Verwendung der erfindungsgemäßen Anlage zur Herstellung von Wasserstoff und Sauerstoff, oder zur Herstellung von Synthesegas und Sauerstoff.

### Ausführungsbeispiele

Weitere Merkmale und Ausgestaltungen der Erfindung ergeben sich aus der Beschreibung der folgenden Ausführungsbeispiele. Die Ausführungsbeispiele stellen keine Beschränkung der Erfindung dar.

Es zeigt
- Figur 1: ein Fließschema für ein Dampfreformierungsverfahren 100 gemäß Stand der Technik,
- Figur 2: ein Fließschema für ein erfindungsgemäßes Verfahren 200 gemäß einer ersten beispielhaften Ausführungsform der Erfindung,
- Figur 3: ein Fließschema für ein erfindungsgemäßes Verfahren 300 gemäß einer zweiten beispielhaften Ausführungsform der Erfindung,
- Figur 4: ein Fließschema für ein erfindungsgemäßes Verfahren 400 gemäß einer dritten beispielhaften Ausführungsform der Erfindung.

In den Figuren und den folgenden Figurenbeschreibungen sind gleiche Elemente mit jeweils gleichen Bezugsziffern versehen.

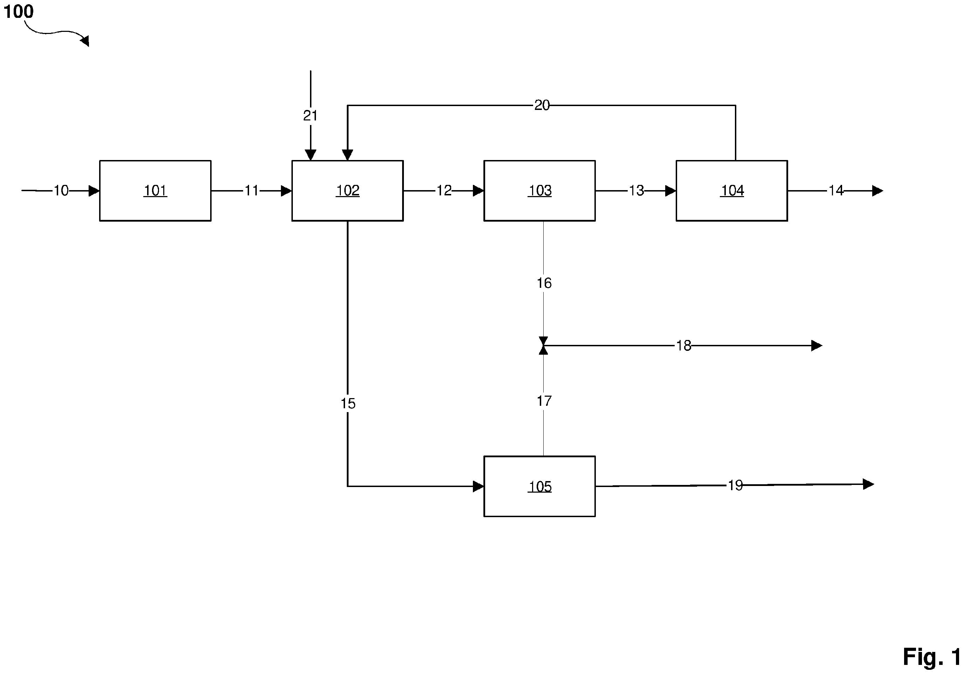

Figur 1 zeigt ein vereinfachtes Fließschema für ein Dampfreformierungsverfahren 100 wie aus dem Stand der Technik bekannt. Als kohlenstoffhaltiger Einsatzstoff verwendetes Erdgas 10 wird einer Einheit zur Hydrodesulfurierung 101 zugeführt, um Schwefelverbindungen vollständig aus dem Erdgas zu entfernen. Das Erdgas besteht hauptsächlich aus Methan und wird, falls erforderlich, in einem Vorreformer behandelt, um Kohlenwasserstoffverbindungen mit zwei oder mehr Kohlenstoffatomen mit Dampf zu Methan, Kohlenmonoxid und Wasserstoff umzusetzen.

Das entschwefelte Erdgas wird aufgeheizt (nicht gezeigt) und einer Einheit zur Dampfreformierung 102 zugeführt. In der Dampfreformierungseinheit 102 wird in Erdgas 11 enthaltenes Methan und der Dampfreformierungseinheit 102 zugeführter Dampf 21 bei circa 800 bis 900 °C in einem Reformerofen an einem Nickelkatalysator zu heißem Synthesegas 12 umgesetzt. Das heiße Synthesegas 12 weist zumindest die Bestandteile Wasserstoff, Kohlenmonoxid sowie Kohlendioxid auf. Das heiße Synthesegas 12 wird anschließend einer Synthesegasabkühlung 103, beispielsweise einem Abhitzekessel, zugeführt. Die im heißen Synthesegas 12 enthaltene Prozesswärme wird im Abhitzekessel dazu genutzt, Dampf 16 zu erzeugen, welcher aus dem Abhitzekessel der Synthesegasabkühlung 103 abgezogen wird.

Im Rahmen der Dampfreformierung 102 erzeugtes Synthesegas wird optional, zur Erhöhung der Wasserstoffausbeute, einer Wassergas-Shift Einheit (nicht gezeigt) zugeführt, um im Synthesegas 12 enthaltenes Kohlenmonoxid mit Wasserdampf zu Kohlendioxid und Wasserstoff umzusetzen. Dies kann vor der Synthesegasabkühlung 103 im Rahmen einer sogenannten Hochtemperaturshift oder nach der Synthesegasabkühlung 103 im Rahmen einer sogenannten Niedrigtemperaturshift erfolgen.

Die Dampfreformierung 102 ist ein endothermer Prozess und wird durch das direkte Befeuern von mit Nickelkatalysator beschickten Reaktionsrohren ermöglicht. Die dafür genutzten Brenngase verbrennen zu heißen Verbrennungsgasen 15, welche in einer Einheit zur Verbrennungsgas-Wärmerückgewinnung 105 abgekühlt werden. Die in den heißen Verbrennungsgasen 15 enthaltene Prozesswärme wird dabei zur Erzeugung von Dampf 17 genutzt, welcher aus der Einheit zur Verbrennungsgas-Wärmerückgewinnung 105 abgezogen wird. Gleichzeitig werden die durch die Dampferzeugung generierten, abgekühlten Verbrennungsgase 19 aus der Einheit zur Verbrennungsgas-Wärmerückgewinnung abgezogen und aus dem Verfahren ausgeschleust.

Der durch die Abkühlung des heißen Synthesegases 12 zu kaltem Synthesegas 13 gewonnene Dampf 16 sowie der durch die Abkühlung der Verbrennungsgase 15 zu abgekühlten Verbrennungsgasen 19 gewonnene Dampf 17 werden zu einem gemeinsamen Strom aus Dampf 18 zusammengeführt und als Exportdampf aus dem Verfahren 100 ausgeschleust.

Kaltes Synthesegas 13 wird einer Einheit zur Druckwechseladsorption 104 zugeführt, in welcher Wasserstoff von weiteren im Synthesegas enthaltenen Gasen abgetrennt wird. Die dabei anfallenden Abgase 20 enthalten teilweise Gase mit hohem Heizwert, wie Wasserstoff, Kohlenmonoxid und nicht umgesetztes Methan. Diese werden zur Dampfreformierung 102 zurückgeführt und können dort als Brenngase genutzt werden.

Der im Rahmen der Druckwechseladsorption 104 von den übrigen Synthesegasbestandteilen abgetrennte Wasserstoff 14 wird als Hauptprodukt aus dem Verfahren ausgeschleust.

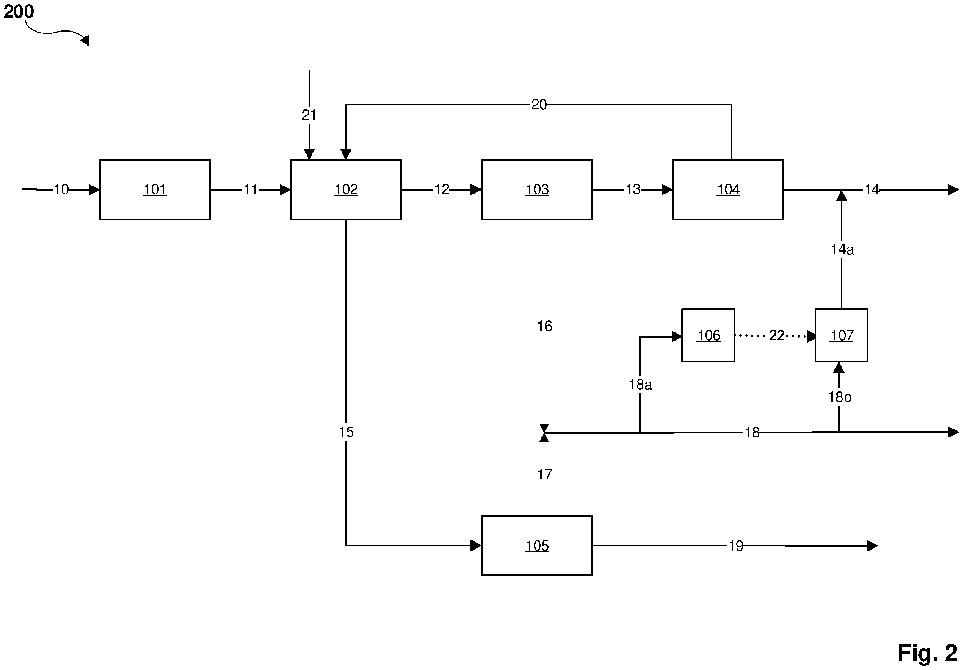

Figur 2 zeigt ein vereinfachtes Fließschema für ein erstes Beispiel 200 des erfindungsgemäßen Verfahrens, welches sowohl Dampfreformierung als auch Hochtemperaturelektrolyse in einem gemeinsamen Verfahren integriert.

Durch Übertragung von Prozesswärme aus der Synthesegasabkühlung 103 und der Verbrennungsgas-Wärmerückgewinnung 105 gewonnener Dampf 18 wird gemäß dem Beispiel der Figur 2 teilweise als Dampf 18a aus dem Hauptstrom abgezweigt und für die Erzeugung von Elektrizität (elektrischem Strom) genutzt. Dies erfolgt durch eine Kombination aus Dampfturbine und Generator 106. Gleichzeitig wird ein Teil des erzeugten Dampfs 18 als Dampf 18b aus dem Hauptstrom abgezweigt und als Edukt in einem Schritt einer Hochtemperaturelektrolyse 107 zur Erzeugung von Wasserstoff und Sauerstoff genutzt. Für die elektrolytische Spaltung des Dampfs 18b in Wasserstoff und Sauerstoff wird der durch die Kombination aus Dampfturbine und Generator 106 erzeugte Strom genutzt. Im Rahmen der Hochtemperaturelektrolyse 107 werden Wasserstoff und Sauerstoff als getrennte Ströme erzeugt. Sauerstoff wird aus dem Verfahren ausgeschleust und anderweitig verwendet (nicht gezeigt). Wasserstoff 14a wird aus dem Hochtemperaturelektrolyseur der Hochtemperaturelektrolyse 107 abgezogen und mit durch die Dampfreformierung 102 erzeugten und gereinigten Wasserstoff 14 zusammengeführt.

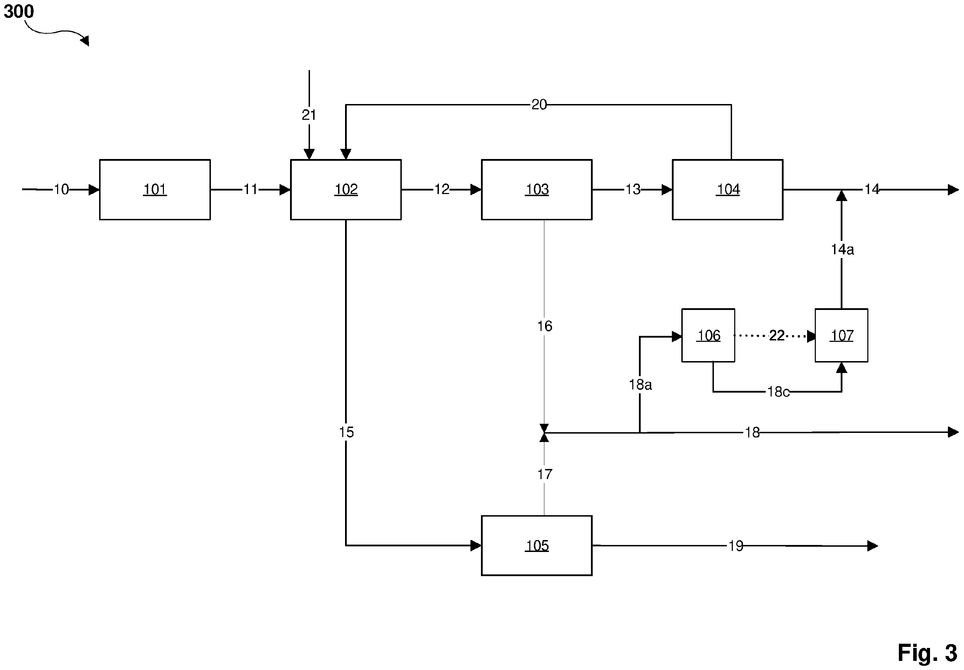

Figur 3 zeigt ein vereinfachtes Fließschema für ein zweites Beispiel 300 des erfindungsgemäßen Verfahrens, welches sowohl Dampfreformierung als auch Hochtemperaturelektrolyse in einem gemeinsamen Verfahren integriert.

Das Verfahren gemäß Figur 3 unterscheidet sich von dem Verfahren gemäß Figur 2 darin, dass ein Teil des der Kombination aus Dampfturbine und Generator 106 zugeführten Dampfs 18a aus der Dampfturbine abgezogen und als Dampf 18c dem Schritt der Hochtemperaturelektrolyse 107 zugeführt wird. Der von Dampf 18a abgezweigte Dampf 18c wird somit nicht wie Dampf 18a für die Stromerzeugung genutzt, sondern als Edukt-Dampf in der Hochtemperaturelektrolyse 107 zur Erzeugung eines Wasserstoff und Sauerstoff enthaltenden Elektrolyseprodukts genutzt.

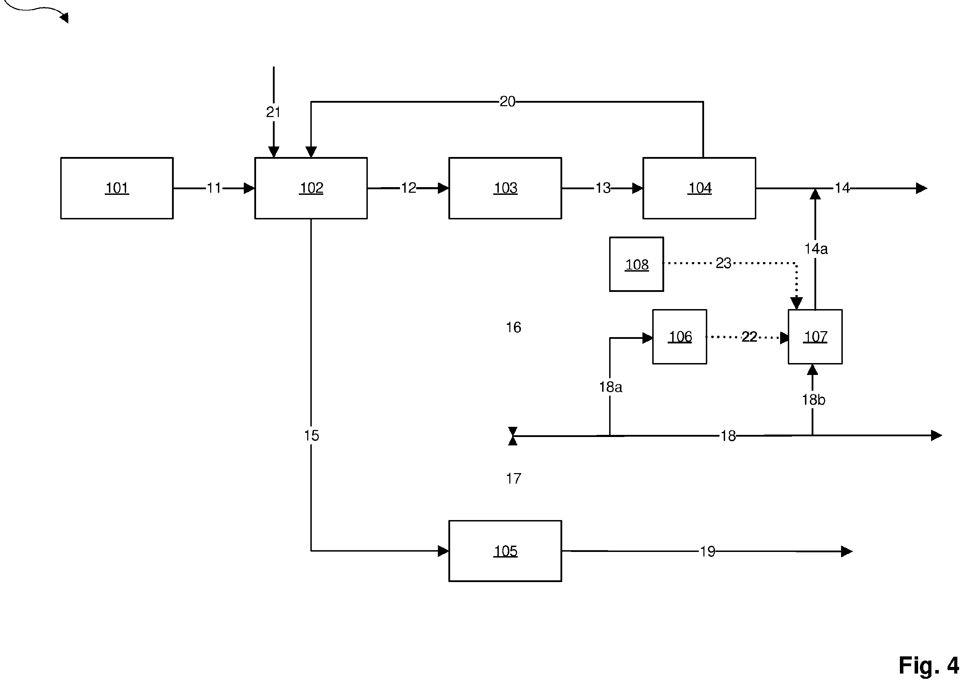

Figur 4 zeigt ein vereinfachtes Fließschema für ein drittes Beispiel 400 des erfindungsgemäßen Verfahrens, welches sowohl Dampfreformierung als auch Hochtemperaturelektrolyse in einem gemeinsamen Verfahren integriert.

Das Verfahren gemäß Figur 4 unterscheidet sich von dem Beispiel gemäß Figur 2 darin, dass nur ein Teil des für die Hochtemperaturelektrolyse 107 erforderlichen Stroms indirekt durch Dampf 18a mittels der Kombination aus Dampfturbine und Generator 106 erzeugt wird (elektrischer Strom 22). Ein weiterer Teil des für die Hochtemperaturelektrolyse 107 erforderlichen Stroms wird durch Strom aus einer externen Elektrizitätsquelle 108 bereitgestellt. Bei externer Elektrizitätsquelle 108 handelt es sich um eine externe Stromversorgung, die vorzugsweise Strom aus einer erneuerbaren Energiequelle zur Verfügung stellt, beispielsweise Strom aus Windkraft oder Sonnenkraft.

Ausführungsformen der Erfindung werden unter Bezugnahme auf verschiedene Arten von Gegenständen beschrieben. Insbesondere werden bestimmte Ausführungsformen unter Bezugnahme auf Ansprüche des Verfahrenstyps beschrieben, während andere Ausführungsformen unter Bezugnahme auf die Ansprüche des Vorrichtungstyps beschrieben werden. Ein Fachmann wird jedoch aus der obigen und der folgenden Beschreibung entnehmen, dass, außer anders angegeben, zusätzlich zu irgendeiner Kombination von Merkmalen, die zu einer Art von Anspruchstyp gehören, auch jede Kombination von Merkmalen in Bezug auf verschiedene Arten von Gegenständen oder Anspruchstypen in Betracht gezogen werden kann. Merkmale können kombiniert werden um synergetische Effekte zu erzielen, welche über die einfache Summierung der technischen Merkmale hinausgehen.

Während die Erfindung im Detail in der Zeichnung und der vorhergehenden Beschreibung dargestellt und beschrieben wurde, sollen eine solche Darstellung und Beschreibung als veranschaulichend oder beispielhaft und nicht einschränkend betrachtet werden. Die Erfindung ist nicht auf die offenbarten Ausführungsformen beschränkt. Andere Variationen der offenbarten Ausführungsformen können von einem Fachmann auf dem Gebiet der beanspruchten Erfindung aus einem Studium der Zeichnung, der Offenbarung und der abhängigen Ansprüche verstanden und ausgeführt werden. Bezugszeichen in den Patentansprüchen dienen der beispielhaften Erläuterung und stellen keine Beschränkung der Erfindung dar.

### Bezugszeichenliste

- 10: Erdgas
- 11: entschwefeltes und aufgeheiztes Erdgas
- 12: heißes Synthesegas
- 13: kaltes Synthesegas
- 14, 14a: Wasserstoff
- 15: Verbrennungsgase
- 16: Dampf (durch Synthesegasabkühlung)
- 17: Dampf (durch Verbrennungsgasabkühlung)
- 18, 18a, 18b, 18c: Dampf
- 19: Abgekühlte Verbrennungsgase
- 20: Abgas aus Druckwechseladsorption
- 21: Dampf (für Dampfreformierung)
- 22, 23: Elektrischer Strom

- 101: Hydrodesulfurierung
- 102: Dampfreformierung
- 103: Synthesegaskühlung
- 104: Druckwechseladsorption
- 105: Verbrennungsgas-Wärmerückgewinnung
- 106: Dampfturbine/Generator
- 107: Hochtemperaturelektrolyse
- 108: Externe Elektrizitätsquelle

## Patentansprüche

1. Verfahren (200, 300, 400) zur Herstellung von Wasserstoff (14, 14a) durch Dampfreformierung (102) und Hochtemperaturelektrolyse (107), wobei das Verfahren die folgenden Schritte umfasst:
(a) Erzeugen eines Synthesegases (12, 13) aus einem kohlenstoffhaltigen Ausgangsmaterial (11) und Dampf (21) durch Dampfreformierung (102), wobei das Synthesegas (12) zumindest Wasserstoff (14), Kohlenmonoxid und Kohlendioxid umfasst;
(b) Erzeugen von Dampf (16, 17, 18) durch Erhitzen von Wasser mittels in Schritt (a) generierter Prozesswärme;
(c) Verwendung des in Schritt (b) erzeugten Dampfs als Edukt (18b) in einem Hochtemperaturelektrolyse-Schritt (107) zur Erzeugung eines Elektrolyseprodukts, wobei das Elektrolyseprodukt Wasserstoff (14a) und Sauerstoff umfasst;
(d) Abtrennen von Wasserstoff (14, 14a) aus dem in Schritt (a) erhaltenen Synthesegas und aus dem in Schritt (c) erhaltenen Elektrolyseprodukt.

2. Verfahren nach Anspruch 1, **dadurch gekennzeichnet, dass** die in Schritt (a) erzeugte Prozesswärme durch Abkühlen des in Schritt (a) erzeugten Synthesegases (12) bereitgestellt wird.

3. Verfahren nach Anspruch 1 oder 2, **dadurch gekennzeichnet, dass** die in Schritt (a) erzeugte Prozesswärme durch Abkühlen von Verbrennungsgasen (15) bereitgestellt wird, wobei die Verbrennungsgase bei der Verbrennung von Brenngasen erzeugt werden, wobei die Brenngase für die Befeuerung der endothermen Reformierungsreaktion bei der Dampfreformierung (102) genutzt werden.

4. Verfahren nach einem der Ansprüche 1 bis 3, **dadurch gekennzeichnet, dass** der in Schritt (b) erzeugte Dampf (18a) für die Erzeugung von Elektrizität (22) genutzt wird, und die erzeugte Elektrizität für die Erzeugung des Elektrolyseprodukts im Hochtemperaturelektrolyse-Schritt (107) gemäß Schritt (c) genutzt wird.

5. Verfahren nach Anspruch 4, **dadurch gekennzeichnet, dass** der in Schritt (b) erzeugte Dampf (18a) einer Dampfturbine zugeführt wird, und die Elektrizität durch einen der Dampfturbine nachgeschalteten Generator erzeugt wird.

6. Verfahren nach Anspruch 5, **dadurch gekennzeichnet, dass** ein Teil des Dampfs aus der Dampfturbine abgezogen und als Edukt (18c) dem Hochtemperatur-Elektrolyseschritt (107) gemäß Schritt (c) zugeführt wird.

7. Verfahren nach einem der Ansprüche 1 bis 6, **dadurch gekennzeichnet, dass** für die Erzeugung des Elektrolyseprodukts im Hochtemperaturelektrolyse-Schritt (107) gemäß Schritt (c) eine externe Elektrizitätsquelle (108) genutzt wird.

8. Verfahren nach Anspruch 7, **dadurch gekennzeichnet, dass** die externe Elektrizitätsquelle (108) Elektrizität aus einer erneuerbaren Energiequelle bereitstellt.

9. Verfahren nach einem der Ansprüche 1 bis 8, **dadurch gekennzeichnet, dass** im Hochtemperaturelektrolyse-Schritt (107) gemäß Schritt (c) ausschließlich Dampf als Edukt verwendet wird, wobei das Elektrolyseprodukt Wasserstoff und Sauerstoff umfasst.

10. Verfahren nach einem der Ansprüche 1 bis 8, **dadurch gekennzeichnet, dass** im Hochtemperaturelektrolyse-Schritt gemäß Schritt (c) sowohl Dampf als auch Kohlendioxid als Edukte verwendet werden, wobei das Elektrolyseprodukt Synthesegas und Sauerstoff umfasst.

11. Verfahren nach Anspruch 10, **dadurch gekennzeichnet, dass** das Synthesegas Wasserstoff und Kohlenmonoxid umfasst.

12. Verfahren nach Anspruch 10 oder 11, **dadurch gekennzeichnet, dass** das für den Hochtemperaturelektrolyse-Schritt als Edukt verwendete Kohlendioxid durch Abtrennung aus dem in Schritt (a) erzeugten Synthesegas gewonnen wird.

13. Eine Anlage zur Herstellung von Wasserstoff (14, 14a) durch Dampfreformierung (102) und Hochtemperaturelektrolyse (107), wobei die Anlage folgende miteinander in Fluidverbindung stehende Anlagenkomponenten aufweist:
(a) Eine Dampfreformierungseinheit zur Erzeugung eines Synthesegases (12) aus einem kohlenstoffhaltigen Ausgangsmaterial (11) und Dampf (21) durch Dampfreformierung (102), wobei das Synthesegas (12) zumindest Wasserstoff (14), Kohlenmonoxid und Kohlendioxid umfasst;
(b) Mittel zum Erzeugen von Dampf (16, 17, 18) durch Erhitzen von Wasser mittels in der Dampfreformierungseinheit (a) erzeugter Prozesswärme;
(c) einen Hochtemperatur-Elektrolyseur zur Erzeugung eines Wasserstoff (14a) und Sauerstoff aufweisenden Elektrolyseprodukts aus durch die Mittel (b) erzeugtem Dampf (18b) als Edukt;
(d) eine Vorrichtung zum Abtrennen von Wasserstoff (14) aus mittels der Dampfreformierungseinheit (a) erzeugten Synthesegases (13) und eine Vorrichtung zum Abtrennen von Wasserstoff (14a) aus mittels des Hochtemperatur-Elektrolyseurs (c) erzeugten Elektrolyseprodukts.

14. Eine Anlage, insbesondere Anlage nach Anspruch 13, konfiguriert zur Durchführung des Verfahrens nach einem der Ansprüche 1 bis 12.

15. Verwendung einer Anlage nach einem der Ansprüche 13 oder 14 zur Herstellung von Wasserstoff und Sauerstoff, oder zur Herstellung von Synthesegas und Sauerstoff.
